Europäisches Patentamt

European Patent Office

Office européen des brevets

(11) Publication number: 0 125 072

A2

# (12) EUROPEAN PATENT APPLICATION

(21) Application number: 84302812.7

(22) Date of filing: 26.04.84

(51) Int. Cl.³: B 62 D 25/18

(30) Priority: 27.04.83 GB 8311540

(43) Date of publication of application:
14.11.84 Bulletin 84/46

(84) Designated Contracting States:
AT BE CH CH DE FR GB IT LU NL SE

(71) Applicant: SCHLEGEL (UK) HOLDINGS LIMITED
Ring Road
Seacroft Leeds, LS14 1LY(GB)

(72) Inventor: Holding, David
23 Top oth'Brow Cottages Off Riding Gate
Harwood Bolton Lancashire(GB)

(72) Inventor: Wright, Joseph
16 Kirkland Avenue
Baildon Yorkshire BD17 6EQ(GB)

(72) Inventor: Pullan, Ronald Ernest
8 Lynwood Grove
Leeds Yorkshire LS12 4AU(GB)

(74) Representative: Carpmael, John William Maurice et al,
CARPMAELS & RANSFORD 43 Bloomsbury Square
London, WC1A 2RA(GB)

(54) Suppression of spray from motor vehicles.

(57) Spray suppression apparatus for motor vehicles for use in the vicinity of wheels (W) of the vehicles so as to provide a barrier which allows the passage of air but prevents water passing therethrough, the apparatus comprising one or more porous strips (5) which are preferably formed of bristle material and which extend from the peripheries of the vehicle mudguards (M) into close proximity with the vehicle tyres, both internally and externally of the wheels (W), there being a mud flap (1) behind each wheel (W) with a brush strip (17) extending from its lower edge and there preferably being further strips (21) extending transversely across the wheel or wheel sets (W). The flexible porous strips (5, 17, 21) due to their construction, always remain air permeable but are designed so that spray is discouraged from escaping from the wheel areas but instead is returned to the road surface, especially by the strip (17) on the bottom edge of the mud flap (1). Composite constructions of strip may be provided and the bristles themselves may be kinked.

FIG. 2.

SUPPRESSION OF SPRAY FROM MOTOR VEHICLES

This invention relates to apparatus for suppressing spray generated by motor vehicles, especially heavy goods vehicles, as they travel at speed on wet roads.

It is well known that commercial motor vehicles moving at 40 mph or more on a wet road will generate a spray screen around and behind them, through which it is impossible to see, making it extremely hazardous to overtake. This spray results largely from water off the road surface being picked up by the wheels of the vehicle, due largely to surface tension, and subsequently being formed into small droplets as a result of being smashed against parts of the vehicle, after being thrown or stripped off the tyre surface, due to centrifugal action, or the passage of air over the tyre as the vehicle advances.

Also, large vehicle's tyres can each move up to about 90 gallons of water per minute from the road surface when travelling at speed, and a large proportion of this is squeezed out behind each tyre, as a tyre footprint plume of almost solid water, extending rearwardly of the tyre, over an arc subtending about 45° with the road surface. This water is dashed against the mud flap or a following vehicle wheel or other portion of the vehicle, and instantly, as with water thrown off the tread, is formed into droplets. All these droplets then become entrained in the currents of air generated by the rotating wheels and by the passage of the vehicle forwardly at high speed, and result in a blanket of fine mist in the turbulent air behind and to the sides of the vehicle.

Clearly, if the water picked up by the vehicle tyres and the footprint plume can be confined to the wheel arch areas of the vehicle, and/or returned to the road behind the wheels, that will help solve the problems associated with spray generation. Various attempts in this direction have been made, some of the best known being those disclosed in U.S. Patent No. 3899192, WO82/03829 and U.K. Patent Specification Nos. 2078181A, 2084094A and 2035932A and U.K. Patent No. 1483047. However, none of these prior proposals has resulted in a really satisfactory solution, largely because the spray suppression devices concerned do not form a sufficient barrier for the passage of water droplets emerging from the vehicle's wheel areas, or because the devices clog up with fibres and mud, and form what is effectively a solid barrier for both the water and the air currents which are generated. As a result, the air currents exit from under the vehicle body, with water droplets entrained in them, and the spray cloud is hardly suppressed at all.

In our U.K. Patent Specification No. 2074109A, a method of suppressing spray generated by the wheels of a vehicle travelling at speed on a wet road surface is disclosed wherein at least one strip of brush-like material, which:

a) comprises a strip of bristles held in a backing strip,

b) has a depth which is greater than the width of the strip of bristles, and

c) is substantially longer than said depth, is located on the vehicle or a part thereof in the path of the spray so as to provide a generally waterproof barrier to the passage of spray thrown up from the road or off the tyre(s) on the wheel(s) as the or each tyre rotates. This results in satisfactory spray suppression, and the present invention seeks to provide an improvement over the method and the vehicle disclosed in our said patent specification. There is also disclosed in the said specification a motor vehicle fitted with at least one spray suppressing brush-like strip which:-

a) comprises a strip of bristles held in a backing strip,

b) has a depth which is greater than the width of the strip of bristles, and

c) is substantially longer than said depth, and is located on the vehicle or a part thereof in the path of the spray so as to provide a generally waterproof barrier to the passage of spray thrown up from the road or off the tyre(s) on the wheel(s) as the or each tyre rotates.

According to one feature of the present invention, we provide apparatus for suppressing spray generated by a wheel of a motor vehicle when travelling at speed on a wet road surface, comprising a first valance strip of any flexible porous material, e.g. bristle material, which is sufficiently dense to prevent the passage of water droplets but allowing the passage of air, arranged, in use, at least substantially to close off the space between the outer peripheral area of a vehicle tyre and either the outer periphery of the vehicle's mudguard or the underside of the vehicle's body in the vicinity of said tyre.

According to another feature of this invention, we provide, for a motor vehicle, a mud flap, impervious to the passage of air and water, and at least the lower part of which may be flexible, and may be fitted to the trailing edge of the mudguard, or to the vehicle's body behind, and above a wheel, and a second strip of flexible material, which is preferably porous and which is preferably bristle material, secured to the bottom edge of the mud flap so that, in use, it is in close proximity with the road. This second strip of bristle material is preferably formed in the manner shown in our U.K. Patent No. 1457074 and the bristles may be longer than those in the first strip, and be held together by warp yarns knitted or woven into the bristles or bristle tufts. Likewise such yarns may also be provided in the valance strip. Their presence affects the flexibility, density and porosity of the strip.

Preferably, a third strip of bristle material extends inwardly from the outer edge of the mudguard, or from the underside of the vehicle body, over at least the total width of the wheel or set of wheels therein so as to provide an air permeable but generally waterproof barrier to the passage of spray thrown or stripped off the tyre(s) on the wheel(s) as the or each tyre rotates, the third strip being within the mudguard when one is provided.

According to another feature of this invention, we provide a flexible, porous internal valance strip, e.g. a strip of bristle material which extends between the inner periphery of the vehicle tyre and either the inner periphery of the vehicle's mudguard or the vehicle's body in the vicinity of the tyre. A similar strip may be provided at the leading edge of the mudguard, or in front of the relevant wheel or wheel set.

Another feature of this invention is to provide each rear wheel or rear wheel set for a vehicle, whether it be the rear wheels of a trailer or semitrailer or the rear wheels of a tractor vehicle, with a separate mudguard and a single flexible porous strip, preferably a brush strip extending from the mud flap, around the outer arcuate periphery of the mudguard, around the leading edge of the mudguard and then around the inner arcuate periphery of the mudguard, and ending at the mud flap adjacent, preferably spaced from the opposite end of the strip, thus providing a continuous bristle strip around the total peripheral edge of the mudguard. As an alternative, the single flexible porous strip can be designed or be used in conjunction with special fixing parts so that it can be fitted to the vehicle body, thus encasing the upper part of the wheel or wheel set and acting as the mudguard and it can be used in conjunction with a mud flap.

In the case of the front wheels of a vehicle, it may be unnecessary to provide a brush strip along the leading or front edge of the mudguard (i.e. across the front of the front wheels) and an internal valance strip, and accordingly a single outer valance strip only may extend around the arcuate outer periphery of the mudguard or valance plates attached thereto, or to the vehicle body, and ending at the mud flap. It the vehicle is of the type with a forward tilting cab for engine maintenance purposes, each of these strips may be formed in two or more parts.

According to another feature of the invention, we provide a flexible porous strip, preferably a bristle strip, having a first valance portion for securing to the arcuate edge of a vehicle mudguard, and a second portion integral with the valance portion, and for extending around the curved rear external periphery of the mudguard, and extending at least partially along a trailing edge of the mudguard.

If desired, each bristle strip may be of composite construction with a first layer of bristles and a second layer either of different bristles or of other flexible porous material, e.g. a non-woven or woven material. The layers may be adjacent or spaced from each other and parallel or inclined to each other.

It is even envisaged that two bristle strips may be provided, separated by another porous layer.

If desired, the bristles, instead of being straight, may be of an angled configuration, or may be inclined to a support, which may be flexible, for the bristles.

Preferably, the bristles are formed of a synthetic resinous mono-filament and are held in their strip form by a compatible synthetic resinous backing which may be supported in a rigid or flexible holder which may be of generally 'h' shaped configuration, the upstand of the 'h' being used to connect the strip to the mudguard periphery by means of bolts, rivets or other means. This upstand need not be straight. The backing may be integral with holder.

In the above description, flexible porous strips have mainly been described which may be connected to a part of a vehicle mudguard. Not all vehicles, especially trailers of articulated vehicles, have mudguards, and the strips may accordingly be designed to replace the combination of a strip and a mudguard, and be connected directly to a part of the vehicle, thus providing a spray suppressing shroud. Obviously, their fixing devices may have to be specially designed for this purpose, but they then provide what is the equivalent of a mudguard.

Various features of the present invention are now described, by way of example only, with reference to the accompanying drawings, in which:-

FIGURE 1 is an exploded perspective view illustrating how a traditional vehicle mudguard is fitted with spray suppression apparatus;

FIGURE 2 is a perspective view of the mudguard fitted with the spray suppression apparatus and about to be fitted to a double wheel set of a vehicle;

FIGURE 3 is a side elevation showing the fitted mudguard in position, and

FIGURE 4 is a partly exploded perspective view showing the invention applied to the front wheel of a vehicle.

Referring to the drawings, a mudguard M for a double wheel set W of a vehicle V is of largely traditional arcuate construction with an outer peripheral flange F and a similar inner peripheral flange (not shown). The leading edge L of the mudguard M is located slightly above the rotational axis of the wheel set W whereas the trailing edge T is located at the same level as the wheel axis.

A mud flap 1 formed of rubber or other polymeric material is secured to the rear edge of the mudguard M in known manner and the upper portion of the flap 1 is prevented from flexing by means of a generally U-shaped bar 3 itself secured to the flap 1 in known manner some distance from the bottom edge of the flap. The ends of the bar 3 are rigidly secured to the rear of the mudguard M and it will thus be appreciated that only the lower portion of the flap 1 can flex. It will of course be appreciated that this effect could be achieved in other ways.

However, in a modified construction all of the mud flap could flex. This or the previous effect could be achieved by not making the mud flap quite as long as that shown in the drawing.

A first strip of bristle material 5 is secured to the peripheral edge of the outer mudguard flange or valance F using a polymeric strip A of generally 'h' shaped cross-section, the upstand of the 'h' being bolted or otherwise secured to the flange F in known manner and the inverted U-shape of the strip A receiving a polymeric bead forming part of the bristle strip and holding the bristles together in known manner. A further 'h' shaped strip C is secured to the trailing edge T of the mudguard M and another strip B similar to the strips A and C but having a kinked securing flange S is secured to the leading edge L of the mudguard M. Likewise, another 'h' shaped strip A is secured to the inner flange of the mudguard M, thus allowing the bristle strip 5 to extend largely completely around the periphery of the mudguard M.

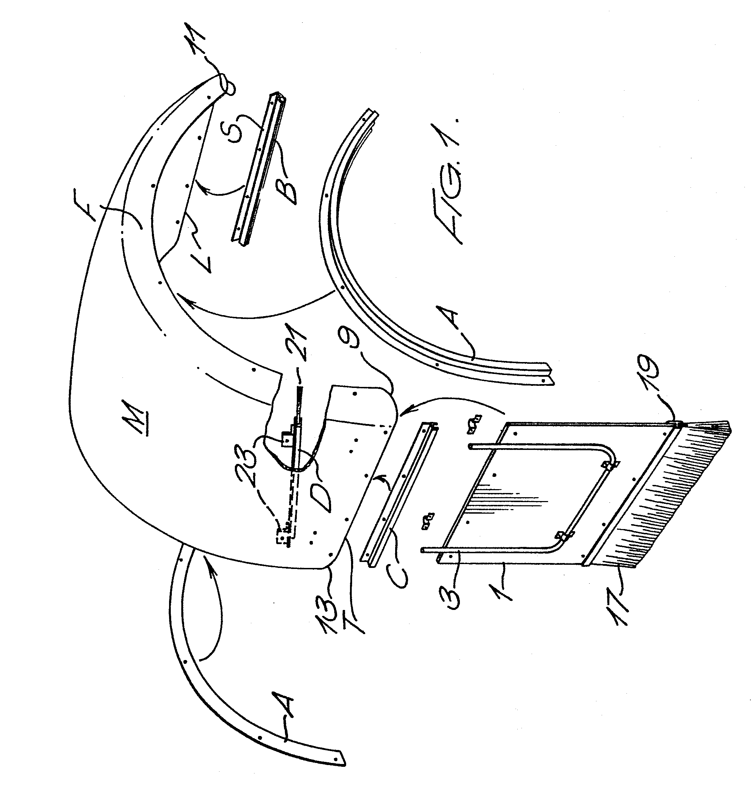

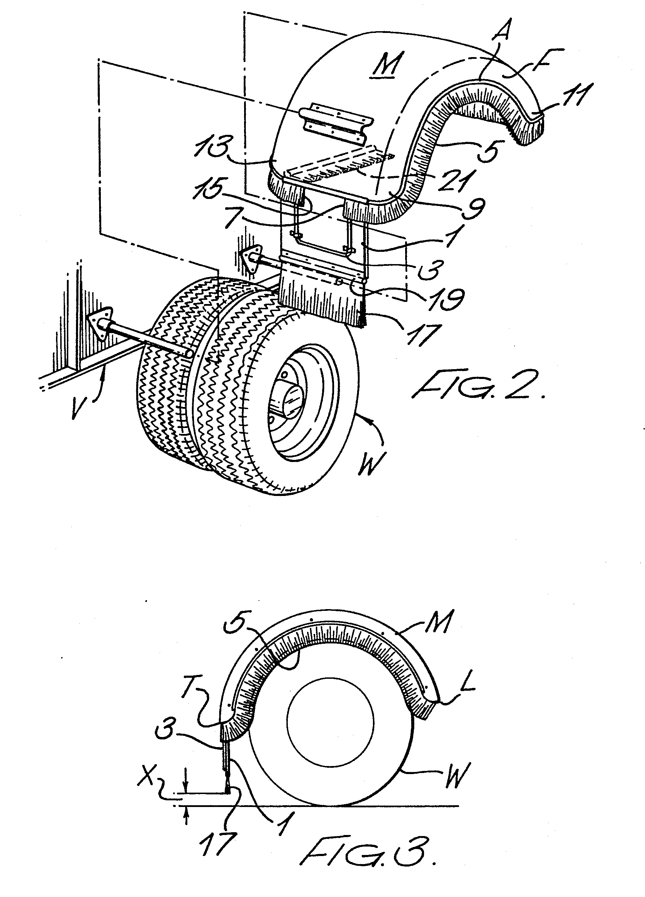

As can be seen from Figure 2, one end 7 of the strip 5 is tucked behind the mud flap 1 and the strip 5 is then entrained around the curved trailing edge 9 of the flange F, then along the arcuate periphery of this flange, held in place by the strip A, around the leading curved edge 11, along leading edge L held in place by the strip B, around the inner curved leading edge, along the periphery of the arcuate inner mudguard flange held in position by the other or inner strip A and is then curved around the trailing curved edge of the inner flange 13 and is tucked around the rear of the mud flap 1, again terminating at an end 15 opposite the end 7.

If desired, where the bristles extend around the arcuate edges of the mudguard flanges they may be inclined slightly inwardly so that when the vehicle to which the mudguard is fitted is loaded they almost touch the vehicle wheels W or their side walls. This can be achieved either by modifying the shape of the 'L' shaped strips A, or by 'kinking' the bristles in the strips of material 5, or in other ways.

A second bristle strip 17 is secured to the lower edge of the mud flap 1 by means of a generally 'h' shaped fixing strip 19, and while the strip 5 would normally be somewhere in the region of 2" to 6" (5.08cm to 15.24cm) deep, and preferably from 3" to 5" (7.62cm to 12.70cm) deep, the bristle strip 17 would normally be about 7" (17.78cm) deep.

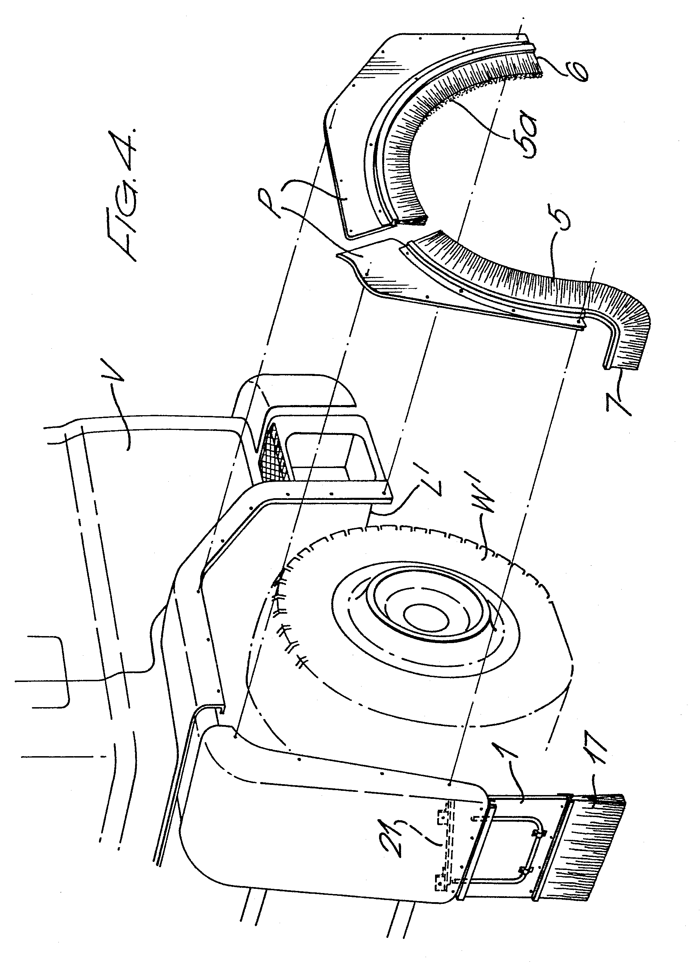

As is clearly apparent from Figure 3, the lower edge of the bristle strip 17, when the vehicle to which it is fitted is unloaded, should be located at a distance X from the ground where X is approximately equal to the suspension travel of the vehicle, or a fraction greater.

A third bristle strip 21 is provided within the mudguard M and is secured in a similar manner to the other two strips 5 and 17 to the mudguard by means of an 'h' shaped fixing strip D and brackets 23, the third bristle strip 21 being located in the rear quarter of the mudguard and sloping from its outer end to its inner end downwardly, the length of the bristles in the strip 21 being just sufficient that the gap between the mudguard and tyre surface is almost bridged so that the tyre peripheries are almost or even just contacted by the tips of the bristles as the tyres rotate with the vehicle fully loaded.

It will be appreciated that the construction of the mudguard M and mud flap 1 may be different from that illustrated. For example, the mud flap could be substantially rigid and could even be formed integral with the mudguard M and the end portions 7 and 15 of the bristle strip 5 instead of being vertically spaced from the bristle strip 17, may be located closer to the bristle strip 17. In other words, if the mudguard and mud flap were slightly differently contoured the bristle strip 5 could be extended along the edge of the mudguard and then down the vertical edges of the mud flap 1 which could merge through a curve with the bottom edge so that the end portions 7 and 15 extend slightly along the bottom edge of the mud flap so as to overlap the strip 17. It is, however, important that the valance portion of the strip 5 is integral with a portion which extends at least partially horizontally since this ensures that water collected by the brush strip is re-directed back to the road surface.

In the construction shown in Figure 4, the front wheel W' of the vehicle is located within a two part angular wheel arch so designed to allow the cab of the vehicle V to tilt forwardly. It will of course be appreciated that this wheel arch could be of any other construction but so as to convert the angular wheel arch illustrated, so as to provide a generally arcuate rigid valance defining a wheel opening, adaptor plates P are provided. As in the previous construction, a valance strip 5 and a further valance strip 5a are secured to the arcuate periphery of the plates P using 'h' shaped fixing strips as before and whereas the end 7 of the strip 5 is tucked around behind the rear of the mud flap 1 as before, the bristle strip 5a is terminated at a leading edge 6 since it has been found that there is usually no need to provide bristle strip around the leading front edge L' of the front mudguard. Likewise, there is usually no need for internal valance strip to be provided, as the vehicle body is solid at this location. However, both types of strip could be provided if desired. The second and third bristle strip 17 and 21 are provided as before.

If the vehicle is provided with pairs of wheel sets W, one behind the other, either on the tractor vehicle or at the rear of the vehicle itself or a semitrailer, then each wheel set may be provided with a mudguard M and associated mud flaps and bristle strips as shown in Figure 2.

It has been found that when a vehicle is fitted with spray suppression apparatus as described above and is driven at high speed on wet roads, the amount of spray thrown into the path of other vehicles travelling behind or alongside the vehicle is quite small in comparison with an identical vehicle having no spray suppression apparatus. It is believed that this is because the bristles, being closely located together and several mono-filament layers thick, will prevent water, picked up by the vehicle wheel tread and formed into thousands of droplets when it is thrown against the wheel arch by centrifugal force, passing through the bristle screen. These water droplets, when they are dashed against the wheel arch, become entrained in the turbulent air surrounding the wheels and it has been found that unless this air can escape through the spray suppression apparatus, the water droplets will follow the air stream. However, the bristle strip does allow air to pass therethrough and acts in effect as a water filter. The water retained by the bristle strip within the wheel arches either runs down the bristles and drips back onto the road off the ends of the bristles or else, due to the forward passage of the vehicle along the road, passes to the rear of the wheel arch and cascades down the rear inner face of the mudguard and down the inner surface of the mud flap 1 and bristle strip 17 and drops back onto the road.

Of course, the third bristle strip 21 acts both as a screen and as a brush which strips water carried by surface tension on the tyre tread(s) off the tyre tread(s), tending to return it back to the road surface. Photographs taken of a vehicle fitted with spray suppression apparatus as described above clearly show droplets of water falling back onto the road surface from the ends of the bristles along almost the total length of the strip 5 and also show that the lower portion of the mud flap 19 and the second bristle strip 17 deflect rearwardly and deposit water in a continuous stream back onto the road surface.

It is believed that the water thrown from the tyre treads by centrifugal force or stripped from them by the air stream and subsequently becoming airborne particles accounts for a major portion of the spray produced by fast travelling motor vehicles. However, this is usually only about 25% of the water on the road surface at any given location and the other 75% or thereabouts is formed by the tread of any tyre into what is known as a footprint plume radiating out from beneath that portion of the tread in contact with the road surface. A very large proportion of this footprint plume is forced rearwards by the passage of the vehicle along the road and the effect is similar to that which would be achieved if water was being sprayed through a hose nozzle up off the road surface in the vicinity of the footprint (i.e. where the tyre tread touches the road), the plume subtending an angle of up to about 45° with the road surface in a rearward direction. If this footprint plume is allowed to continue its passage rearwardly until it strikes a following wheel or wheel set or another part of the vehicle, the plume will be smashed into thousands of minute water droplets thus creating a further spray cloud. Accordingly, the mud flap 1 or its equivalent and the second brush strip 17 play a very important part in preventing this happening and explain why a mudguard and mud flap and associated bristle strips should be provided for each wheel or wheel set. As the vehicle advances, so the strip 17 and the bottom of the mud flap if it is flexible will tend to trail or splay backwardly at an angle to the vertical and this will have the effect of directing the footprint plume extending rearwardly back onto the road surface. Of course,

0125072

- 13 -

the bristles in the strip 17 absorb a large amount of energy in the plume at the same time as returning the plume to the road surface.

If desired, the bristle strips can be formed from any resiliently deformable bristle material but a preferred material is a synthetic resinous mono-filament such as polypropylene. Other bristle materials are however possible but the advantage of forming them of a synthetic resinous mono-filament is that they can be held in position by an extruded synthetic resinous bead compatible with the material of the bristles. The strip, however, can be of a composite construction incorporating two or more bristle layers of different density, stiffness or dimensions, or by a layer of bristles and a layer of other material such as one of the many commercially available non-woven materials. If such other material is used on its own as a spray suppressor it is not as satisfactory as bristle because although initially it may suppress water spray, it will soon become clogged with mud or fibrous material, whereupon it then becomes air impervious and cannot act as a water filter but still allow the passage of air. However, by providing a layer of bristles on the inner face of the other material, the bristles during use, will move to and fro relative to each other with a trembling motion. As a result, the spacing between the bristles will continually be changing and the effect of this is to prevent clogging either with mud or fibrous material. This self-cleaning action is most important and it is believed that it can only be achieved if bristle material is used.

By providing the internal valance strip on the inner arcuate periphery of the mudguard M, cross winds which hit the inner face of a wheel are prevented

from travelling over the top of the wheel and then escaping outwardly and destroying the smooth aerodynamic flow around the vehicle.

Although brush strips with straight bristles have been described with reference to the drawings, it will be appreciated that the bristles could be kinked inwards or outwards. Furthermore, it will be appreciated that the angle of the bristles whether they be straight or kinked can be slightly different from the angles illustrated. The angle of the bristles can alternatively (or additionally) be adjusted with an angled or inclined fixing strip.

Many modifications to the construction described with reference to the drawings are possible. For example, it is not essential for the strips 17 to be formed of bristle material; other flexible materials or combinations of materials which are preferably porous, would suffice. However, if bristles are incorporated in the strip 17 it is self-cleaning which is an advantage.

The bristle strips may be formed in any one of a different number of ways but a particularly suitable method if that disclosed in our U.K. Patent No. 1457074. At some stage during their manufacture, warp yarns are normally incorporated in the bristle strips and advantageously some of these warp yarns may be kept in the strip so as to reduce its flexibility and thus also affect its porosity. It is especially advantageous to incorporate these yarns in the strip 17 if it is a bristle strip.

As can be seen clearly from Figure 2 and Figure 4, the trailing portion of the valance strip 5 has bristles which extend generally forwardly during forward passage of a vehicle to which the strip is fitted. In certain circumstances, these bristles, due to the slipstream of the vehicle, may be splayed rearwardly thus affecting their performance. It may be desirable therefore to provide support means on either side of the strip at least at this location to prevent this displacement of the bristles. This support means could be any relatively stiff porous material which would not suffer due to wind deflection.

A big advantage of using bristle strips for the spray suppression apparatus is that their flexibility means that they are continually flexing in use and hence are self-cleaning. Also when there is snow on the road surface, slush does not stick to them. Other types of spray suppressor tend to encourage a build-up of dirt and of slush. Furthermore, if a vehicle is left standing and the bristles become frozen together, the bristles are not damaged by ice and in practice it is found that the ice soon breaks free due to the flexible nature of the bristles. What is more, even if the vehicle wheels are fitted with chains, these chains cannot damage the bristles since they merely flex out of the way. This is of course also the case when the front wheels of the vehicle are turned for steering purposes since the wheels can actually be turned through the bristles. Again, this cannot occur with other types of spray suppression apparatus which must necessarily therefore be further spaced from the tyres.

As described, the bristle strip at the front edge of each mudguard is at approximately axle height. It may however, be somewhat higher than this and a line drawn from the bristle strip to the axle may subtend an angle of about 20° with the horizontal. Normally, however, at the trailing edge of the mudguard the bristle strip would be at about axle level or slightly below it, with the mud flap and its attached bristle strip below that.

Although it is preferred that the bristle strip 5 shown in Figures 1 and 2 is a continuous strip, it could if desired incorporate a joint, for example along the leading edge of the mudguard.

In the above description with reference to the drawings, the spray suppression strips have been mainly associated with vehicle's mudguards. Some vehicles, however, especially heavy goods vehicles such as the trailers of articulated vehicles, are not fitted with mudguards as such, and at most, have a generally rectangular enclosure, enclosing one, two or even three wheels or wheel sets, perhaps partly closed e.g. at the rear end by a mud flap. The present invention is also applicable to such vehicles and when applied to such vehicles, the relevant flexible porous strips may have to be modified accordingly. For example, the strips may be formed integral with, or be designed to be connected to specially designed fixing strips or valance mouldings, or the equivalent, so that with these fixing strips or mouldings or the equivalent, the flexible porous strips form a spray suppressing system for each wheel, or wheel set, or set of wheels or set of wheel sets. These spray suppression systems would incorporate one or more spray suppression strips and one or more other component parts for fixing the strips to the vehicle (which component part(s) could be integral with the strip(s)) and which act as a mudguard. In some instances these component parts may extend at least partly over the upper portion of a wheel or wheel set to form, with the strip(s) a shroud.

It will of course be understood that the present invention has been described above purely by way of example, and modifications of detail can be made within the scope of the invention.

For example, the valance strip(s) 5, after passing round the curved rear edges of the mudguard, are shown as extending behind the mud flap 1. This is not essential, but it is important that they extend to the mud flap, so as to leave no gap between the bristle strip(s) 5 and the vertical edges of the mud flap, so that the strip(s) 5 form a continuous path for the passage of water collected by the bristles back to the road, via the mud flap 1 and strip 17.

0125072

CLAIMS

1.        Apparatus for suppressing spray generated by a wheel (W) of a motor vehicle when travelling at speed on a wet road surface, comprising a mud flap (1) impervious to the passage of air and water, characterised in that a strip of bristle material (17) projects from the bottom edge region of the flap (1) so that, in use, the free lower ends of the bristles are in close proximity with the road.

2.        Spray suppression apparatus as claimed in claim 1 in combination with a first valance strip (5) of any flexible porous material which is sufficiently dense to prevent the passage of water droplets but allows the passage of air, arranged, in use, at least substantially to close off the space between the outer peripheral area of a vehicle tyre (W) and either the outer periphery of the vehicle's mudguard (M) or the underside of the vehicle's body in the vicinity of said tyre (W).

3.        Spray suppression apparatus as claimed in claim 2 characterised in that the first valance strip (5) is a bristle strip.

4.        Spray suppression apparatus according to claim 3 characterised in that the strip of bristle material (17) on the mud flap is formed from bristles which are longer than those in the first valance strip (5), and are held together by warp yarns (not shown) knitted or woven into the bristles or bristle tufts.

5.        Spray suppression apparatus as claimed in any one of claims 1-4 characterised in that a third strip (21) of bristle material extends inwardly from the outer edge of the mudguard (M), or from the underside of the vehicle body, over at least the total width of the wheel or set of wheels (W) so as to provide an air permeable but generally waterproof barrier to the passage of spray thrown or stripped off the tyre(s) on the wheel(s) (W) as the or each tyre rotates.

6.          Spray suppression apparatus as claimed
in any one of the preceding claims and further comprising
a flexible porous internal valance strip (5) which
extends between the inner periphery of the vehicle
tyre (W) and either the inner periphery of the vehicle's
mudguard or the vehicle's body in the vicinity of
the tyre.

7.          Spray suppression apparatus as claimed
in any one of the preceding claims characterised in
that a flexible porous strip is provided at the leading
edge (L) of the mudguard, or in front of the relevant
wheel or wheel set.

8.          Spray suppression apparatus for a wheel
or wheel set (W) of a motor vehicle, comprising means
(M) acting as a separate mudguard extending, in use,
over at least part of the upper periphery of the wheel
or wheel set (W) and a mud flap (1) depending from
a rear edge of said means behind the wheel or wheel
set (W) so that, in use, it reaches into close proximity
with the road surface, and a flexible porous strip
(5) extending from the mud flap (1) around the outer
periphery of the mudguard means including around its
leading edge (L), and extending to the mud flap (1)
adjacent to the opposite end of the strip (5), thus
providing an uninterrupted strip around the total
peripheral edge of the mudguard means (M), the free
edge of said strip extending, in use, into close proximity
with the tyre surfaces of said wheel or wheel set,
so that it substantially encases or shrouds the upper
part of the wheel or wheel set (W) in conjunction
with the mudguard means (M).

9.          Spray suppression apparatus as claimed
in claim 8 characterised in that the mud flap (1)
has a bristle strip (17) projecting from its bottom
edge region.

10.          Spray suppression apparatus according to
claim 6, 7, 8 or 9 characterised in that the or each

-20-

flexible porous strip (5,17,21) is a bristle strip.

11.        Spray suppression apparatus as claimed in claim 2, 6, 7, 8, 9 or 10 or any of claims 3-7 when dependent on claim 2 characterised in that the flexible porous strip (5,17 or 21) is formed in two or more parts.

12.        Spray suppression apparatus as claimed in any one of claims 1, 3, 4, 5 or 9 characterised in that each bristle strip (5,17 or 21) is of composite construction with a first layer of bristles and a second layer either of different bristles or of other flexible porous material.

13.        Spray suppression apparatus as claimed in any one of claims 1, 3, 4, 5, 10 or 12 characterised in that the bristles in one or more of the bristle strips (5,17 or 21) instead of being straight are of an angled configuration.

14.        Spray suppression apparatus as claimed in any one of claims 1, 3, 4, 5, 10 or 12 characterised in that the bristles in one or more of the bristle strips (5,17 or 21) are inclined to a support for the bristles.

FIG.1.

0125072

0125072

FIG.2.

FIG.3.

FIG. 4.

3/3

0125072